# EUROPEAN PATENT SPECIFICATION

(11) **EP 3 250 516 B1**
(45) Date of publication and mention of the grant of the patent: **22.08.2018**
(21) Application number: 16707939.1
(22) Date of filing: 29.01.2016
(51) Int. Cl.: C02F 1/46, C02F 1/461, C02F 103/08

(54) **DESALINATION DEVICE AND PROCESS USING GAS DIFFUSION ELECTRODES**
ENTSALZUNGSVORRICHTUNG UND ENTSALZUNGSVERFAHREN MIT GASDIFFUSIONSELEKTRODEN
DISPOSITIF ET PROCÉDÉ DE DESSALEMENT UTILISANT DES ÉLECTRODES À DIFFUSION GAZEUSE

(30) Priority: 30.01.2015 EP 15153192
(43) Date of publication of application: 06.12.2017
(73) Proprietor: Genio S.r.l., 20121 Milano (IT)
(72) Inventor: CAVALLI, Stefano, I-37019 Peschiera del Garda (Verona) (IT); BILATO, Stefano, I-37019 Peschiera del Garda (Verona) (IT); TREVISAN, Marco, I-37015 Sant'Ambrogiodi Valpolicella (Verona) (IT)
(74) Representative: Münchow, Vera Ute Barbara
(86) International application number: PCT/IB2016/000067
(87) International publication number: WO 2016/120717

(56) References cited:
- US-A1- 2009 314 718
- US-A1- 2010 140 103
- US-A1- 2010 270 158
- KIROS Y ET AL: "Oxygen reduction electrodes for electrolysis in chlor-alkali cells", ELECTROCHIMICA ACTA, ELSEVIER SCIENCE PUBLISHERS, BARKING, GB, vol. 51, no. 16, 10 April 2006 (2006-04-10), pages 3346-3350, XP025168368, ISSN: 0013-4686, DOI: 10.1016/J.ELECTACTA.2005.10.024 [retrieved on 2006-04-10]
- YOUPENG QU ET AL: "Simultaneous water desalination and electricity generation in a microbial desalination cell with electrolyte recirculation for pH control", BIORESOURCE TECHNOLOGY, ELSEVIER BV, GB, vol. 106, 12 November 2011 (2011-11-12), pages 89-94, XP028123906, ISSN: 0960-8524, DOI: 10.1016/J.BIORTECH.2011.11.045 [retrieved on 2011-11-25]

## Description

### TECHNICAL FIELD

The present invention relates to a device and process for seawater and industrial brine desalination.

### STATE OF THE ART

Desalinization (also called desalination) is the process of removing dissolved salts in water, obtaining, as a result, freshwater from seawater or brackish water. In other words, desalinization refers to a technological process for the extraction of solvent (water) from salt solutions and the resulting freshwater production from seawater or industrial brines.

A desalinization device is known in the art by the application of distillation techniques or by reverse osmosis desalination or by means of electrodialysis desalinators. All three cases considered include a considerable energy source consumption, generally electrical energy in case of reverse osmosis and electrodialysis desalinators, or fuel for heating saline solution. Furthermore, in addition to the saline water supply inlet line and the freshwater or desalinated water outlet line, also the waste brine line is necessary. The document US2010/0140103 discloses a low voltage low energy electrochemical system using a gas diffusion anode and a cathode. US2010/0270158 discloses a microbial fuel desalination cell using a gas diffusion cathode and an anode.

Waste brines play a very important role in terms of environmental impact of existing desalinization techniques. These consist in saline solutions being too concentrated to be reprocessed by the system in an affordable way and are, therefore, managed as waste solutions. Given the increased salinity of these brines, their dispersion in the sea or soil demonstrated, over the years, the onset of a high environmental impact with the increase in relative salinity in dispersion areas and subsequent effects on flora and sea fauna or on drinking water availability from groundwater sources. Over the years, such environmental impact led to an exacerbation of the international legislations with regard to the possible application of such known technologies, leading to their substantial inapplicability in the areas more affected by the need for freshwater supply from desalinization.

Notwithstanding the important advances in desalination technologies, seawater desalinization is still a technology with a higher energy consumption compared to conventional technologies for freshwater treatment; this is the most relevant aspect that limits their commercial development. Furthermore, there are also strong concerns regarding potential environmental impacts of large seawater desalinization plants, since they produce waste (brine) that cannot be discharged into the sea. Such environmental drawback was found in all technologies currently existing on the market.

In addition to environmental impact generated from waste brine, a second critical point concerning presently known technologies is inherent to energy consumptions related to water desalinization activity for the production of drinking water. Over the last 20 years, most of the research was concentrated on this aspect, in order to particularly optimize reverse osmosis and fractional distillation desalinization processes, nevertheless, energy consumptions mainly related to these two techniques are among the highest in the water treatment industry. By way of example, a reverse osmosis desalinization plant consumes approximately 3 kWh/m³, from which, considering about 0.20 US $/kW, an energy cost of 0.60 US $/m³ is derived, against a maximum value of 0.90 US $/m³ of the produced water. On the other hand, concerning the evaporation processes, it is known that a vapour distillation of the turbine to the pressure of 6 bar subtracts enthalpy to the expansion in an amount equal to the theoretical production of about 5 kWh/m³ of desalinated water produced by evaporation. Such energy, known as latent heat, is thus a non-recoverable energy consumption.

Today, as a consequence, the development of desalination technologies is entirely aimed at reducing energy consumption, while the desalination *post*treatment step, i.e. the disposal of *hyper*-saline waste, was not fully and adequately addressed to date.

### DISCLOSURE OF THE INVENTION

The invention has the object of overcoming the mentioned problems, and precisely proposes a new device and process for desalination that is simultaneously efficient and environmentally friendly in order to meet the increasingly more stringent environmental requirements, i.e. a device and process for desalination that has low management and investment costs, able to avoid or chemically enhance waste (brine).

Thus, the object of the invention is the presentation of a device and a related process for the production of desalinated water from industrial brine or seawater, allowing first to solve the problem of waste brine production, and secondly to optimize energy consumption per cubic metre of desalinated water.

A further object of the invention is to provide a desalination device and process able to provide a 99%-desalinated water, i.e. suitable for human consumption, with lower investment and operating costs compared to the known art and without producing waste (brine).

In a first aspect of the invention, the objects are achieved by a desalinization device comprising:
(a) a gas diffusion anode suitable to transform hydrogen H₂ into H⁺ hydrogen ions;
(b) a gas diffusion cathode connected through an electrical connection to said gas diffusion anode and suitable to transform oxygen O₂ into OH⁻ hydroxide ions;
(c) a system to feed said gas diffusion anode with hydrogen;
(d) a system to feed said gas diffusion cathode with oxygen;
(e) a cation exchange membrane;
(f) an anion exchange membrane;
wherein
(i) said cathode is contained in a cathodic chamber suitable to contain or containing a catholyte;
(ii) said anode is contained in an anodic chamber suitable to contain or containing an anolyte;
(iii) said anodic chamber and said cathodic chamber are separated by said cation exchange membrane and by said anion exchange membrane which, in turn, are separated by a third chamber suitable to contain or containing an aqueous salt solution,
where
(a) said cation exchange membrane is simultaneously a wall or a part thereof of said cathodic chamber and of said third chamber, so that a salt cation passage is possible from the third chamber to the cathodic chamber;
(β) said anion exchange membrane is simultaneously a wall or a part thereof of said anodic chamber and of said third chamber so that a salt anion passage is possible from the third chamber to the anodic chamber.

The device, object of the invention, is able to treat industrial saline solutions or seawater in order to produce the extraction of ions dissolved in the aqueous solution producing as a residue a solvent flow (deionized water) and two separate solutions, one containing anions and the other cations, previously dissolved in the saline solution, conveniently stabilized respectively by hydronium ion or (improperly) acidic proton and hydroxide or hydroxyl ion.

This device and a related process (to be later described), according to the invention, chemically enhance waste (brine) through the production of basic chemical products and have a low investment cost.

The device and the desalinization process according to the invention are characterised by a coupled use of fuel cell technology and ion exchange membranes. Compared to a classical fuel cell, the separation of anodic and cathodic chambers is realized through the interposition of a third chamber delimited by two ion exchange membranes.

Ion exchange membranes are known from various electrochemical and osmotic applications and are readily identifiable by a person skilled in the art. It is thus possible to omit a detailed description of the membranes.

The three chambers are separated from each other; liquid contents are not directly mixable; an exchange is permitted only within the scope of the ionic exchange through membranes.

The operation principle of the desalinization device according to the invention is comparable to the operation principle of a similar technology, i.e. the fuel cell. As in fuel cells, in the device according to the invention, the oxidant and reducing gases are flowed through a gas diffusion electrode, for example a carbon electrode conveniently treated with platinum particles in order to catalyse the production of the H⁺ ion from hydrogen and the OH⁻ ion from oxygen.

The electrochemical circuit is represented by an electrolyte consisting of a saline solution contained between the two membranes, that of the cationic type and that of the anionic type. In this case, the driving force that leads to the ion extraction from the solution is given by the principle of the electrical neutrality of solutions, which determines that cation (having positive charge) and anion (having negative charge) concentrations are related so that an increase in an ionic species is associated with an increase in the concentration of the other species having opposite charge, so that the solution maintains a global null electric charge. Due to the ability of ion exchange membranes to selectively transport positively or negatively charged ions and reject oppositely charged ions, it is possible not only to separate ions from the aqueous solution, but also to constrain them in separate chambers, neutralising them with appropriate H⁺ or OH⁻ ions, in order to produce acidic or basic concentrated solutions.

In the hydrogen oxidation chamber, i.e. in the anodic chamber, in order to produce H⁺ ions, a free electron is released on the electrode; conversely, in the reduction chamber, i.e. in the cathodic chamber, in order to obtain the production of OH⁻ ions from oxygen, a free electron is picked up. Correspondingly, a second external circuit, an electrical circuit, is realized through the electrical connection of two electrodes on which it advantageously generates a direct current. As described, thus, the present device is able to produce electrical energy during desalinization as an essential phenomenon to the electrochemical circuit closure. Such electric current is exploitable as in fuel cells.

Secondly, advantageously, the described technology does not involve any thermal process or pressure processes or any type of fluid mechanical movement if not exclusively that given by the flows within the chambers.

In third analysis, the present desalination process, assimilable to an electrodialysis process, differs from it by the fact that it does not involve waste brine formation, since it does not proceed to the extraction of pure solvent portions from the solution but rather, conversely, to the direct extraction of ions from the solution. Moreover, the possibility of separately extracting and constraining positive and negative ions in separate chambers allows the realization of what may be defined a reverse acid-base neutralization reaction, allowing to reproduce the respective concentrated acids and the respective concentrated bases from the saline solution.

In a preferred variant of the invention, in the desalinization device, each chamber is provided with an inlet and an outlet, and precisely:
(a) the anodic chamber is provided with an inlet for the diluted anolyte and an outlet for the concentrated acid;
(b) the cathodic chamber is provided with an inlet for the diluted catholyte and an outlet for the concentrated base; and
(c) the third chamber is provided with an inlet for the initial salt solution and an outlet for the reduced-concentration salt solution.

This system allows a continuous device operation. There are three inlets for three different liquids (anolyte, catholyte and brine, wherein anolyte and catholyte do not correspond to brine) and three outlets for the production of three usable non-waste solutions: drinking water, acid and base.

Preferably, the cathode, the anode and membranes are plate-shaped and are essentially arranged in parallel therebetween. Such arrangement is simple and compact. Thus, in the device according to the invention, anode, anodic chamber, anion exchange membrane, third chamber, cation exchange membrane, cathodic chamber and cathode are in succession.

In an advantageous variant of the invention, the anolyte is an acid, the catholyte is a base and the salt solution is a salt solution composed of the anion of the acid and the cation of the base. This allows the production of concentrated acids and bases from their respective neutralization product, the salt. Most preferably, the anolyte is hydrochloric acid, the catholyte is sodium hydroxide and the salt solution is a sodium chloride solution. In this constellation it is possible to desalinate seawater. Obviously, the device can also be used for the desalinization of other kind of concentrated salt solutions such as industrial process waste.

Advantageously, the electrodes are carbon electrodes comprising catalyst particles, in particular platinum. The presence of the catalyst simplifies hydrogen and oxygen transformation respectively into H⁺ and OH⁻. Other kind of electrodes, known from the art of fuel cells, are possible.

Preferably, the system to feed the gas diffusion anode with hydrogen is a methane-fed reformer. The use of such reformer allows the production of synthesis gas (H₂ and CO₂).

Advantageously, the system to feed said gas diffusion cathode with oxygen is a system that provides air. Air is a very economical choice and is available everywhere.

Another aspect of the invention relates to a desalinization process comprising the following steps:
(a) providing a device according to the invention;
(b1) feeding of the anodic chamber with an anolyte, preferably a diluted acid;
(b2) feeding of the cathodic chamber with a catholyte, preferably a diluted base;
(b3) feeding of the third chamber with a concentrated salt solution;
(C1) oxidation of hydrogen H₂ on the anode with formation of H⁺ hydrogen ions that enter into the anodic chamber;
(c2) oxygen reduction on the cathode with formation of OH⁻ hydroxide ions that enter into the cathodic chamber;
(d1) in reaction to the increase in H⁺ ion concentrations in the anodic chamber, passage of salt anions from the third chamber to the anodic chamber;
(d2) in reaction to the increase in OH⁻ ion concentrations in the cathodic chamber, passage of salt cations from the third chamber to the cathodic chamber.

Advantageously, a concentrated acid is extracted from the anodic chamber, a concentrated base is extracted from the cathodic chamber and drinking water or water for irrigation use, preferably drinking water, is extracted from the third chamber. Thus, desalinated water and two basic chemical products, a concentrated acid and base, are obtained.

With the device and process according to the invention it is possible to:
- produce electrical energy through hydrogen oxidation, for example generated through methane reforming, and oxygen reduction, for example of the oxygen contained in the air,
- regenerate an acid, for example hydrochloric acid, and a base, for example sodium hydroxide, from a salt solution, such as sodium chloride, through salt component migration between cation and anion exchange membranes. Accordingly, waste (brine) production will not occur, but basic chemical products are obtained.

The unique technology advantages according to the invention can be, *inter alia,* described with:
(a) production of drinking water;
(b) production of electrical energy (11kWh/m³ of desalinated water); and
(c) production of basic chemicals, such as hydrochloric acid and sodium hydroxide.

The desalinization principle according to the invention, may be described as a spontaneous pump ionic desalination (SPID) or as a spontaneous membrane ionic transfer (SMIT), the trade name chosen by the applicant for the technology according to the invention.

The features described for one aspect of the invention may be transferred *mutatis mutandis* to the other aspect of the invention.

Said objects and advantages will be better highlighted during the description of preferred embodiment examples of the invention given, by way of non-limiting example.

Variants of the invention are the object of the dependent claims. The description of preferred embodiments of the device and desalinization process according to the invention is given, by way of non-limiting example and not of limitation, with reference to the attached drawings.

### BRIEF DESCRIPTION OF THE DRAWINGS

- Fig. 1: illustrates, in a schematic diagram, the desalination device and process mode of operation according to the invention.
- Fig. 2: illustrates, in an exploded view, an embodiment of the desalinization device according to the invention.

### DESCRIPTION OF PREFERRED EMBODIMENTS

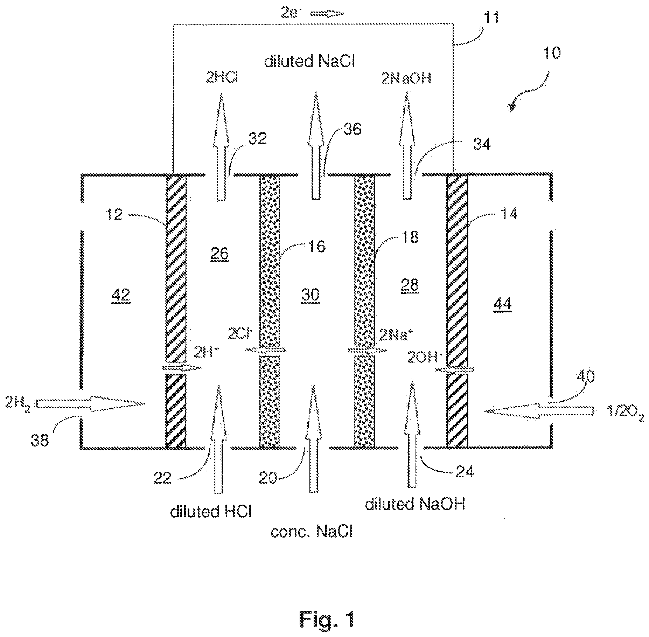

With particular reference to figure 1, the device and process operation principle according to the invention is illustrated. The device generally referred to as **10** comprises two gas diffusion electrodes (GDE) **12** and **14** and, precisely, a gas diffusion anode **12** and a gas diffusion cathode **14.** The two electrodes are necessary for the oxidation and reduction of feeding gases, herein hydrogen and oxygen, of the fuel cell realized in the device **10**. These electrodes **12** and **14** are separated by two membranes **16** and **18.** Membrane **16** is an anion exchange membrane (AEM), while membrane **18** is a cation exchange membrane (CEM). An inlet **20** connected to a salt water inlet line, an inlet **22** connected to an anolyte (diluted HCl) inlet line, and an inlet **24** connected to a catholyte (diluted NaOH) inlet line are further noted. The anolyte enters in a first chamber **26** formed between anode **12** and anion exchange membrane **16.** The catholyte enters in a second chamber **28** formed between cathode **14** and cation exchange membrane **18**. Finally, salt water enters in a third chamber **30** formed between the two ion exchange membranes **16** and **18**. In each chamber **26**, **28** and **30** an outlet is provided, and precisely in the first chamber **26** an outlet **32** for concentrated acids, in the second chamber an outlet **34** for concentrated bases and in the third chamber **30** an outlet **36** for drinking water or water for irrigation use.

Finally, the device **10** provides a hydrogen inlet **38** and an oxygen inlet **40** that are part, respectively, of a fourth and fifth chamber **42** and **44.** Fourth chamber **42** is defined on one side by anode **12,** while fifth chamber **44** is defined on one side by cathode **14.** Electrodes **12** and **14** are permeable to hydrogen and oxygen. Electrodes **12** and **14** are connected through an electrical connection **11**. Hydrogen H₂ and oxygen O₂ oxygen are oxidised and reduced respectively on anode **12** and cathode **14** to form H⁺ hydrogen ions and OH⁻ hydroxide ions. These ions leave the respective electrodes to enter into the first chamber **26** and second chamber **28.**

Hydrogen oxidation (anodic process) and oxygen reduction (cathodic process) processes are represented by the following equations (1) and (2):

½O₂ + H₂O + 2e⁻ → 2OH⁻ (1)

H₂ → 2H⁺ + 2e⁻ (2)

The driving force of the system is the electrical neutrality principle, which determines that cation (having positive charge) and anion (having negative charge) concentrations are related to each other so that an increase in the concentration of one ionic species is associated with an increase in the concentration of the other species having opposite charge. Since the used membranes have the ability to selectively transport positively (membrane **18**) or negatively (membrane **16**) charged ions and reject oppositely charged ions, it is possible to separate, remove and concentrate electrolytes. In the specific case illustrated in figure 1, the increase in the H⁺ ion concentration in chamber **26** causes the compensation of the positive charges introduced with the entrance of Cl⁻ ions from chamber **30** through the anion exchange chamber **16,** while the increase in the OH⁻ ion concentration in chamber **28** causes the compensation of the negative charges introduced with the entrance of Na⁺ ions from chamber **30** through the cation exchange membrane **18.** These processes cause an increase in hydrochloric acid HCl concentration in chamber **26,** an increase in sodium hydroxide NaOH concentration in chamber **28** and, finally, a decrease in salt NaCl concentration in chamber **30**. In chambers **26** and **28,** H⁺ and Cl⁻ (forming hydrochloric acid) and OH⁻ and Na⁺ (forming sodium hydroxide) are respectively combined together.

Accordingly, hydrochloric acid and sodium hydroxide may be regenerated by the sodium chloride solution using a cell **10** at three chambers or compartments **26, 28** and **30** defined by two electrodes **12** and **14** and by two ion exchange membranes **16** and **18.**

In summary, the device provides an inlet **20** connected to the saline solution feeding line (not represented), two inlets containing the anolyte and catholyte diluted solutions **22** and **24,** two hydrogen and oxygen feeding inlets **38** and **40,** electrodes **12** and **14** for feeding gases oxidation and reduction, appropriate ion exchange membranes **16** and **18,** an outlet **36** for drinking desalinized water or water for irrigation use, a concentrated acid outlet **32,** a basic concentrated solution outlet **34**.

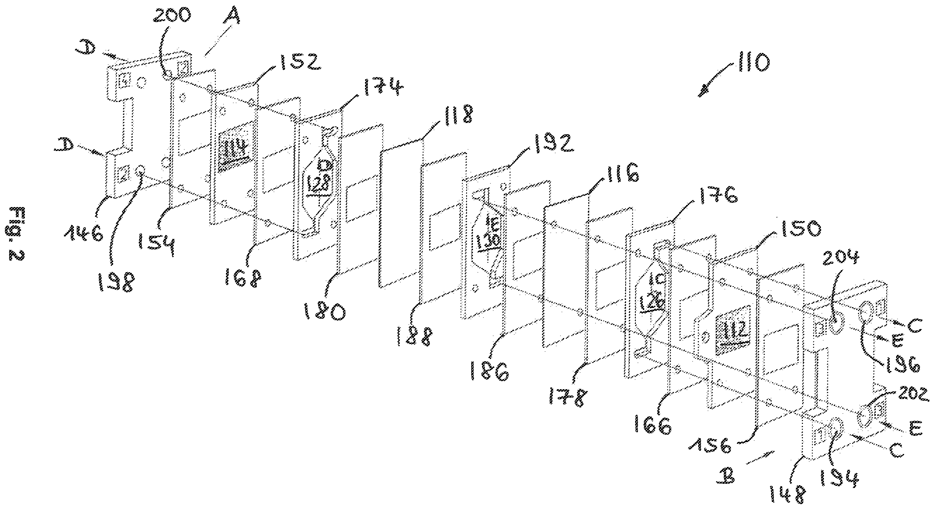

Figure 2 illustrates, in an exploded view, a device **110 8** (a cell) embodiment example according to the invention.

On the external sides of the device **110** there are some perforated walls **146** and **148** defining cell **110.** Proceeding from cell sides **110** towards the inside, two perforated gaskets **154** and **156** are noticed. Between the wall **146** and the gasket **154** a gas compartment (arrow **A**) is inserted (not represented), as well as (arrow **B**) between the wall **148** and the gasket **156**. A gas diffusion cathode **11**4 and a gas diffusion anode **112,** supported by perforated walls **152** and **150,** respectively follow. Electrodes **112** and **114** are followed by perforated gaskets **166** and **168**. Two chambers **128** and **126** in respective perforated walls **174** and **176** are associated. On each side, a perforated gasket **178** and a non-perforated gasket **180** follow, then there are a cation exchange membrane **118** and a perforated anion exchange membrane **116.** Finally, there are a perforated gasket **186** and a non-perforated gasket **188,** one on each side; these gaskets define a third chamber **130** housed in a perforated wall **192.** The presence or absence of said holes and the alignment or non-alignment therebetween determine defined channels for liquid passage, such as the diluted and concentrated anolyte and catholyte and the salt and desalinated water.

Chambers **126, 128** and **130,** electrodes **112** and **114** and membranes **116** and **118** correspond to chambers **26**, **28** and **30**, electrodes **12** and **14** and membranes **16** and **18** of figure 1.

One of the holes **194** of wall **148** is used as an inlet for the anolyte passing through the respective holes aligned with it into chamber **126** where it concentrates and exits from a set of aligned holes through the outlet corresponding to one of the holes **196** of wall **148**. Chamber **126** is defined by anode **112** and by the anion exchange membrane **116**. Anolyte flow is represented by arrows **C**.

One of the holes **198** of wall **146** is used as an inlet for the catholyte passing through the respective holes aligned with it into chamber **128** where it concentrates and exits from a set of aligned holes through the outlet corresponding to one of the holes **200** of wall **146**. Chamber **128** is defined by cathode **114** and by the cation exchange membrane **118.** Catholyte flow is represented by arrows **D.**

Through a third hole **202** of the holes of wall **148** the concentrated salt solution enters and passes through the respective holes aligned with it into chamber **130** where its salt concentration decreases and exits from a set of aligned holes through the outlet corresponding to another hole **204** of the holes of wall **148.** Chamber **130** is defined by cathode exchange membrane **118** and by anion exchange membrane **116.** Salt/desalinated solution flow is represented by arrows **E.**

In an application example of the invention for freshwater production from seawater, the plant is composed of a methane-fed reformer for the production of synthesis gas, containing hydrogen and carbon dioxide and a cell as described above. Such plant is preceded by a normal seawater pre-treatment plant, comprising subsequent filtration steps for organic compound and algae removal and for turbidity stabilization, up to an ultrafiltration step, aimed at the removal of divalent ions dissolved in the solution. The water flow feeding the cell is predominantly composed of water and monovalent ions, including predominantly chlorine and sodium. The reformer is fed with hydrogen or with other liquid fuels and provides hydrogen supply for cell feeding. For each m³ of treated water 0.9 m³ of drinking water are produced, with a methane consumption of about 3.7 m³ per cubic meter of treated water and a subsequent production of 11 kg of NaOH and 19 kg of HCl.

The present invention solves the problems presented above and provides a device and a related process useful for seawater and industrial brine desalination without producing concentrated salt solutions and producing electrical energy and basic chemical products.

The device according to the invention is a fuel cell electrochemical device able to produce electrical energy during the desalinization process, to consume different forms of fossil fuels, to produce desalinated water and finally to reduce salts dissolved in basic chemicals, which can be economically exploited, avoiding brine production.

During implementation, further embodiment modifications or variants of the desalinization device and desalinization process of the invention, not described herein, may be implemented. If such modifications or such variants should fall within the scope of the following claims, they should all be considered protected by the present patent.

## Claims

1. Desalinization device (10; 110) comprising:
(a) a gas diffusion anode (12; 112) suitable to transform hydrogen H₂ into H⁺ hydrogen ions;
(b) a gas diffusion cathode (14; 114) connected through an electrical connection (11) to said gas diffusion anode and suitable to transform oxygen O₂ into OH⁻ hydroxide ions;
(c) a system to feed said gas diffusion anode with hydrogen;
(d) a system to feed said gas diffusion cathode with oxygen;
(e) a cation exchange membrane (18; 118);
(f) an anion exchange membrane (16; 116);
wherein
(i) said cathode (14; 114) is contained in a cathodic chamber (28; 128) suitable to contain or containing a catholyte;
(ii) said anode (12; 112) is contained in an anodic chamber (26; 126) suitable to contain or containing an anolyte;
(iii) said anodic chamber (26; 126) and said cathodic chamber (28; 228) are separated by said cation exchange membrane (18; 118) and by said anion exchange membrane (16; 116) which in turn are separated by a third chamber (30; 130) suitable to contain or containing a salt aqueous solution,
where
(α) said cation exchange membrane (18; 118) is simultaneously a wall or a part thereof of said cathodic chamber (28; 128) and of said third chamber (30; 130) so that there can be a salt cation passage from the third chamber (30, 130) to the cathodic chamber (28; 128);
(β) said anion exchange membrane (16; 116) is simultaneously a wall or a part thereof of said anodic chamber (26; 126) and of said third chamber (30; 130) so that there can be a salt anions passage from the third chamber (30; 130) to the anodic chamber (26; 126).

2. Desalinization device according to claim 1, **characterized in that** each of said chambers (26, 28, 30; 126, 128, 130) is provided with an inlet (20, 22, 24; 194, 198, 202) and an outlet (32, 34, 36, 196, 200, 204), and precisely:
(a) that the anodic chamber (26; 126) is provided with an inlet (194) for the diluted anolyte and an outlet (196) for the concentrated acid;
(b) that the cathodic chamber (28; 128) is provided with an inlet (198) for the diluted catholyte and an outlet (200) for the concentrated base; and
(c) that the third chamber (30; 130) has an inlet (202) for the starting salt solution and an outlet (204) for the reduced concentration salt solution.

3. Desalinization device according to claim 1 or 2, **characterized in that** said cathode (14; 114), said anode (12; 112) and said membranes (16, 18; 116, 118) are plate-shaped and are essentially arranged in parallel therebetween.

4. Desalinization device according to any of claims 1 to 3, **characterized in that** said anolyte is an acid, said catholyte is a base and said salt solution is a salt solution composed of the anion of said acid and of the cation of said base.

5. Desalinization device according to claim 4, **characterized in that** said anolyte is hydrochloric acid, that said catholyte is sodium hydroxide and that said salt solution is a sodium chloride solution.

6. Desalinization device according to any of claims 1 to 5, **characterized in that** electrodes (12, 14; 112, 114) are carbon electrodes comprising catalyst particles, in particular platinum.

7. Desalinization device according to any of claims 1 to 6, **characterized in that** said system to feed said gas diffusion anode with hydrogen is a methane-fed reformer.

8. Desalinization device according to any of claims 1 to 7, **characterized in that** said system to feed said gas diffusion cathode with oxygen is a system that provides air.

9. Desalinization process comprising the following steps:
(a) providing a device (10; 110) according to any of the previous claims;
(b1) feeding the anodic chamber (26; 126) with an anolyte, preferably a diluted acid;
(b2) feeding the cathodic chamber (28; 128) with a catholyte, preferably a diluted base;
(b3) feeding the third chamber (30; 130) with a concentrated salt solution;
(c1) oxidation of hydrogen H₂ on the anode (12; 112) with formation of H⁺ hydrogen ions that enter into the anodic chamber;
(c2) oxygen reduction on the cathode (14; 114) with formation of OH⁻ hydroxide ions that enter into the cathodic chamber;
(d1) in reaction to the increase in H⁺ ion concentrations in the anodic chamber (26; 126), passage of salt anions from the third chamber (30; 130) to the anodic chamber (26; 126);
(d2) in reaction to the increase in OH⁻ ion concentrations in cathodic chamber (28; 128), passage of salt cations from the third chamber (30; 130) to the cathodic chamber (28; 128).

10. Process according to claim 9, **characterized in that** a concentrated acid is extracted from said anodic chamber (26; 126), a concentrated base is extracted from said cathodic chamber (28; 128) and drinking water or water for irrigation use, preferably drinking water, is extracted from said third chamber (30; 130).

## Patentansprüche

1. Entsalzungsvorrichtung (10; 110) umfassend:
(a) eine Gasdiffusionsanode (12; 112) geeignet Wasserstoff H₂ in H⁺-Wasserstoffionen umzuwandeln;
(b) eine Gasdiffusionskathode (14; 114), über eine elektrische Verbindung (11) verbunden mit besagter Gasdiffusionsanode und geeignet Sauerstoff O₂ in OH⁻-Hydroxidionen umzuwandeln;
(c) ein System um besagte Gasdiffusionsanode mit Wasserstoff zu speisen;
(d) ein System um besagte Gasdiffusionskathode mit Sauerstoff zu speisen;
(e) eine Kationenaustauschmembran (18; 118);
(f) eine Anionenaustauschmembran (16; 116);
worin
(i) besagte Kathode (14; 114) in einer Kathodenkammer (28; 128) enthalten ist, die geeignet ist einen Katholyten zu enthalten oder einen Katholyten enthält;
(ii) besagte Anode (12; 112) in einer Anodenkammer (26; 126) enthalten ist, die geeignet ist einen Anolyten zu enthalten oder einen Anolyten enthält;
(iii) besagte Anodenkammer (26; 126) und besagte Kathodenkammer (28; 228) durch besagte Kationenaustauschmembran (18; 118) und durch besagte Anionenaustauschmembran (16; 116) getrennt sind, die ihrerseits durch eine dritte Kammer (30; 130) getrennt sind, die geeignet ist eine Salzwasserlösung zu enthalten oder eine Salzwasserlösung enthält,
wobei
(a) besagte Kationenaustauschmembran (18; 118) gleichzeitig eine Wand oder ein Teil davon besagter Kathodenkammer (28; 128) und besagter dritter Kammer (30; 130) ist, so dass es einen Salzkationenübergang von der dritten Kammer (30, 130) zu der Kathodenkammer (28; 128) geben kann;
(β) besagte Anionenaustauschmembran (16; 116) gleichzeitig eine Wand oder ein Teil davon besagter Anodenkammer (26; 126) und besagter dritter Kammer (30; 130) ist, so dass es einen Salzanionenübergang von der dritten Kammer (30; 130) zur Anodenkammer (26; 126) geben kann.

2. Entsalzungsvorrichtung gemäß Anspruch 1, **dadurch gekennzeichnet, dass** jede besagter Kammern (26, 28, 30; 126, 128, 130) mit einem Eingang (20, 22, 24; 194, 198, 202) und einem Ausgang versehen ist (32, 34, 36, 196, 200, 204), und zwar:
(a) dass die Anodenkammer (26; 126) mit einem Eingang (194) für den verdünnten Anolyten und einem Ausgang (196) für die konzentrierte Säure versehen ist;
(b) dass die Kathodenkammer (28; 128) mit einem Eingang (198) für den verdünnten Katholyten und einem Ausgang (200) für die konzentrierte Base versehen ist; und
(c) dass die dritte Kammer (30; 130) einen Eingang (202) für die Startsalzlösung und einen Ausgang (204) für die Salzlösung reduzierter Konzentration hat.

3. Entsalzungsvorrichtung gemäß Anspruch 1 oder 2, **dadurch gekennzeichnet, dass** besagte Kathode (14; 114), besagte Anode (12; 112) und besagte Membranen (16, 18; 116,118) plattenförmig sind und im Wesentlichen untereinander parallel angeordnet sind.

4. Entsalzungsvorrichtung gemäß einem beliebigen der Ansprüche 1 bis 3, **dadurch gekennzeichnet, dass** besagter Anolyt eine Säure ist, besagter Katholyt eine Base ist und besagte Salzlösung eine aus dem Anion besagter Säure und dem Kation besagter Base zusammengesetzte Salzlösung ist.

5. Entsalzungsvorrichtung gemäß Anspruch 4, **dadurch gekennzeichnet, dass** besagter Anolyt Chlorwasserstoffsäure ist, dass besagter Katholyt Natriumhydroxid ist und dass besagte Salzlösung eine Natriumchloridlösung ist.

6. Entsalzungsvorrichtung gemäß einem beliebigen der Ansprüche 1 bis 5, **dadurch gekennzeichnet, dass** die Elektroden (12, 14; 112, 114) Kohlenstoffelektroden sind, die Katalysatorpartikel, insbesondere Platin, umfassen.

7. Entsalzungsvorrichtung gemäß einem beliebigen der Ansprüche 1 bis 6, **dadurch gekennzeichnet, dass** besagtes System zur Speisung besagter Gasdiffusionsanode mit Wasserstoff ein methangespeister *Reformer* ist.

8. Entsalzungsvorrichtung gemäß einem beliebigen der Ansprüche 1 bis 7, **dadurch gekennzeichnet, dass** besagtes System zur Speisung besagter Gasdiffusionskathode mit Sauerstoff ein System ist, dass Luft liefert.

9. Entsalzungsverfahren enthaltend die folgenden Schritte:
(a) Bereitstellung einer Vorrichtung (10; 110) gemäß einem beliebigen der vorstehenden Ansprüche;
(b1) Speisung der Anodenkammer (26; 126) mit einem Anolyten, vorzugsweise einer verdünnten Säure;
(b2) Speisung der Kathodenkammer (28; 128) mit einem Katholyten, vorzugsweise einer verdünnten Base;
(b3) Speisung der dritten Kammer (30; 130) mit einer konzentrierten Salzlösung;
(c1) Oxidation von Wasserstoff H₂ an der Anode (12; 112) mit der Bildung von H⁺-Wasserstoffionen, die in die Anodenkammer eintreten;
(c2) Sauerstoffreduzierung an der Kathode (14; 114) mit der Bildung von OH⁻-Hydroxidionen, die in die Kathodenkammer eintreten;
(d1) in Reaktion auf die Zunahme der H⁺-Ionenkonzentrationen in der Anodenkammer (26; 126) Übergang von Salzanionen aus der dritten Kammer (30; 130) in die Anodenkammer (26; 126);
(d2) in Reaktion auf die Zunahme der OH⁻-Ionenkonzentrationen in der Kathodenkammer (28; 128) Übergang von Salzkationen aus der dritten Kammer (30; 130) in die Kathodenkammer (28; 128).

10. Verfahren gemäß Anspruch 9, **dadurch gekennzeichnet, dass** eine konzentrierte Säure aus besagter Anodenkammer (26; 126) gewonnen wird, eine konzentrierte Base aus besagter Kathodenkammer (28; 128) gewonnen wird und Trinkwasser oder Wasser zur Bewässerungsverwendung, vorzugsweise Trinkwasser, aus besagter dritter Kammer (30; 130) gewonnen wird.

## Revendications

1. Dispositif de dessalement (10; 110) comprenant :
(a) une anode à diffusion gazeuse (12; 112) permettant de transformer l'hydrogène H₂ en ions hydrogène H⁺;
(b) une cathode à diffusion gazeuse (14; 114) reliée à travers une connexion électrique (11) à ladite anode à diffusion gazeuse et permettant de transformer l'oxygène O₂ en ions hydroxide OH⁻;
(c) un système pour alimenter ladite anode à diffusion gazeuse avec du hydrogène ;
(d) un système pour alimenter ladite cathode à diffusion gazeuse avec de l'oxygène ;
(e) une membrane d'échange cationique (18; 118) ;
(f) une membrane d'échange anionique (16; 116) ;
dans lequel
(i) ladite cathode (14; 114) est contenue dans une chambre cathodique (28; 128) permettant de contenir ou qui contient un catholyte;
(ii) ladite anode (12; 112) est contenue dans une chambre anodique (26; 126) permettant de contenir ou qui contient un anolyte;
(iii) ladite chambre anodique (26; 126) et ladite chambre cathodique (28; 228) sont séparées par ladite membrane d'échange cationique (18; 118) et par ladite membrane d'échange anionique (16; 116), qui à leur tour sont séparées par une troisième chambre (30; 130) permettant de contenir ou qui contient une solution aqueuse saline,
où
(α) ladite membrane d'échange cationique (18; 118) est simultanément une paroi ou une part relative de ladite chambre cathodique (28; 128) et de ladite troisième chambre (30; 130) de manière qu'un passage de cations salins de la troisième chambre (30; 130) à la chambre cathodique (28; 128) soit possible;
(β) ladite membrane d'échange anionique (16; 116) est simultanément une paroi ou une part relative de ladite chambre anodique (26; 126) et de ladite troisième chambre (30; 130) de manière qu'un passage d'anions salins de la troisième chambre (30; 130) à la chambre anodique (26; 126) soit possible.

2. Dispositif de dessalement selon la revendication 1, **caractérisé en ce que** chacune desdites chambres (26, 28, 30; 126, 128, 130) est pourvue d'une entrée (20, 22, 24; 194, 198, 202) et d'une sortie (32, 34, 36, 196, 200, 204), et précisément :
(a) que la chambre anodique (26; 126) est pourvue d'une entrée (194) pour l'anolyte dilué et d'une sortie (196) pour l'acide concentré ;
(b) que la chambre cathodique (28; 128) est pourvue d'une entrée (198) pour le catholyte dilué et d'une sortie (200) pour la base concentrée; et
(c) que la troisième chambre (30; 130) a une entrée (202) pour la solution saline initiale et une sortie (204) pour la solution saline de concentration réduite.

3. Dispositif de dessalement selon la revendication 1 ou 2, **caractérisé en ce que** ladite cathode (14; 114), ladite anode (12; 112) et lesdites membranes (16, 18; 116, 118) sont en forme de plaque et sont essentiellement disposées de façon parallèle entre elles.

4. Dispositif de dessalement selon l'une quelconque des revendications 1 à 3, **caractérisé en ce que** ledit anolyte est un acide, ledit catholyte est une base et ladite solution saline est une solution saline composée de l'anion dudit acide et du cation de ladite base.

5. Dispositif de dessalement selon la revendication 4, **caractérisé en ce que** ledit anolyte est acide chlorhydrique, que ledit catholyte est hydroxyde de sodium et que ladite solution saline est une solution de chlorure de sodium.

6. Dispositif de dessalement selon l'une quelconque des revendications 1 à 5, **caractérisé en ce que** les électrodes (12, 14; 112, 114) sont électrodes de carbone comprenant particules de catalyseur, en particulier platine.

7. Dispositif de dessalement selon l'une quelconque des revendications 1 à 6, **caractérisé en ce que** ledit système pour alimenter ladite anode à diffusion gazeuse avec hydrogène est une unité de reformage alimentée avec méthane.

8. Dispositif de dessalement selon l'une quelconque des revendications 1 à 7, **caractérisé en ce que** ledit système pour alimenter ladite cathode à diffusion gazeuse avec oxygène est un système qui fournit de l'air.

9. Procédé de dessalement comprenant les étapes suivantes :
(a) fournir un dispositif (10; 110) selon l'une quelconque des revendications précédentes ;
(b1) alimenter la chambre anodique (26; 126) avec un anolyte, de préférence un acide dilué;
(b2) alimenter la chambre cathodique (28; 128) avec un catholyte, de préférence une base diluée;
(B3) alimenter la troisième chambre (30; 130) avec une solution saline concentrée;
(c1) oxyder l'hydrogène H₂ sur l'anode (12; 112) avec la formation de ions hydrogène H⁺ qui entrent dans la chambre anodique;
(c2) réduire l'oxygène sur le cathode (14; 114) avec la formation de ions hydroxide OH⁻ qui entrent dans la chambre cathodique;
(d1) en réponse à l'augmentation des concentrations des ions H⁺ dans la chambre anodique (26; 126), faire passer les anions salins de la troisième chambre (30; 130) à la chambre anodique (26; 126) ;
(d2) en réponse à l'augmentation des concentrations des ions OH⁻ dans la chambre cathodique (28; 128), faire passer les cations salins de la troisième chambre (30; 130) à la chambre cathodique (28; 128).

10. Procédé selon la revendication 9, **caractérisé en ce que** un acide concentré est extrait de ladite chambre anodique (26; 126), une base concentrée est extraite de ladite chambre cathodique (28; 128) et de l'eau potable ou de l'eau à usage d'irrigation, de préférence de l'eau potable, est extraite de ladite troisième chambre (30; 130).
